# EUROPÄISCHE PATENTSCHRIFT

(11) **EP 1 508 780 B1**
(45) Veröffentlichungstag und Bekanntmachung des Hinweises auf die Patenterteilung: **22.08.2007**
(21) Anmeldenummer: 04103893.6
(22) Anmeldetag: 12.08.2004
(51) Int. Cl.: G01C 21/36

(54) **Navigationsvorrichtung**
Navigation device
Dispositif de navigation

(30) Priorität: 18.08.2003 DE 10337844
(43) Veröffentlichungstag der Anmeldung: 23.02.2005
(73) Patentinhaber: ROBERT BOSCH GMBH, 70442 Stuttgart (DE)
(72) Erfinder: Barkowski, Andre, 38228, Salzgitter (DE); Jung, Thomas, 33602, Bielefeld (DE); Kersken, Ulrich, 31199, Diekholzen (DE)

(56) Entgegenhaltungen:
- EP-A- 1 024 467
- DE-C- 19 741 149
- US-A1- 2003 132 862

## Beschreibung

### Stand der Technik

Die Erfindung geht aus von einer Navigationsvorrichtung nach der Gattung des Hauptanspruchs. Es sind schon Navigationsvorrichtungen insbesondere für Kraftfahrzeuge bekannt, mit denen ein Fahrer bei der Navigation vor allem in einem Straßennetz unterstützt wird. Hierzu werden einem Fahrer Karteninformationen insbesondere über die Umgebung des Kraftfahrzeugs, Positionsinformationen über den aktuellen Aufenthaltsort des Kraftfahrzeugs und/oder Zielführungsinformationen zur Führung des Fahrzeugs zu einem Fahrziel ausgegeben. Die Ausgabe kann einerseits durch akustische Hinweise erfolgen. Andererseits ist es auch bekannt, die Ausgabe mittels einer Anzeigeeinheit im Fahrzeug vorzunehmen. Hierzu ist es bekannt, in einer grafischen Darstellung Linien für Straßen und Eisenbahnstrecken, Flächen für Orte, Wälder bzw. Seen und Punkte oder Symboldarstellungen für besondere Objekte in der Anzeige darzustellen. Bei diesen besonderen Objekten handelt es sich z.B. um Tankstellen, Werkstätten, touristische Ziele, Krankenhäuser, Bahnhöfe, Flughäfen, oder andere öffentliche Gebäude. Insbesondere ist es vorgesehen, eine Karte einer Fahrzeugumgebung in verschiedenen Vergrößerungsmaßstäben darzustellen. Damit bei einer Vergrößerung des Maßstabs die Karte nicht unübersichtlich wird, ist es vorgesehen, dass mit vergrößertem Maßstab die Kartendarstellung vereinfacht wird. Hierzu werden bestimmte Details aus der Kartendarstellung bei einer Vergrößerung des Maßstabs weggelassen. Während bei einem sehr kleinen Maßstab z.B. Feldwege dargestellt würden, so kann bei einem sehr großen Maßstab nur noch das Autobahnnetz angezeigt werden. Eine Darstellung erfolgt im Allgemeinen in einer zweidimensionalen Darstellung, die in ihrem Aussehen einer herkömmlichen gedruckten Straßenkarte entspricht. Abwandlungen einer solchen Darstellung sind perspektivische Anzeigen, bei denen durch eine perspektivische Darstellung ein dreidimensionaler Effekt entsteht. Eine Kartenfläche wird ein der Vogelperspektive, also z.B. in einer Aufsicht aus einem Winkel von etwa 45° gegenüber der Kartenebene dargestellt. Straßen werden auf der Kartenebene aufgetragen, während sich besondere Objekte über die Kartenebene erheben. Da in einem Fahrzeug oftmals nur Bildschirme von begrenzter Größe zur Verfügung stehen, können entweder nicht alle Informationen dargestellt werden, ohne dass eine Gefahr besteht, dass Darstellung unübersichtlich wird.

Die US 2003/0132862 A1 zeigt ein Navigationssystem mit einer Kartenanzeige, wobei eine Fahrtroute in einer Vogelperspektive in eine Landkarte eingetragen wird. Ferner werden mehrere Landmarken in die Karte eingetragen. Hierbei werden Objekte, die sich abseits der Fahrtroute befinden abgeschwächt gegenüber Objekten, die sich an der Fahrtroute befinden, in der Anzeige dargestellt.

Die EP 1 024 467 A2 zeigt eine stereoskopische Kartendarstellung eines Navigationssystems, bei der Objekte an der Fahrtroute dreidimensional dargestellt werden, während übrige Objekte in einer flachen Darstellung in einer zweidimensionalen Kartendarstellung in Vogelperspektive eingetragen werden.

### Vorteile der Erfindung

Die erfindungsgemäße Navigationsvorrichtung mit den Merkmalen des Hauptanspruchs hat dem gegenüber den Vorteil, dass Objekte in der Umgebung einer Fahrtroute des Fahrzeugs gegenüber anderen Objekten in der weiteren Fahrzeugumgebung hervorgehoben dargestellt sind. Der Blick eines Benutzers der Navigationsvorrichtung wird hierdurch vor allem auf diejenigen Objekte gelenkt, die sich an seiner unmittelbaren Fahrtroute befinden. Die Orientierung des Benutzers in der Fahrzeugumgebung wird hierdurch erleichtert. Dennoch muss ein Benutzer auf zusätzliche Informationen von übrigen Objekten in der Fahrzeugumgebung nicht verzichten, denn diese werden im Allgemeinen weiterhin angezeigt, gegenüber den hervorgehobenen Objekten jedoch in abgeschwächter Form. Gegebenenfalls kann die Anzeige von weiteren Objekten in der Fahrzeugumgebung in einer vereinfachten Darstellung erfolgen. Somit wird eine Unübersichtlichkeit einer Kartendarstellung vermieden. Andererseits erfolgt keine bloße Darstellung einer Fahrtroute, die ein Benutzer in seiner Fahrzeugumgebung gegebenenfalls nicht oder nur mit Mühe wiedererkennen kann. Ferner kann ein Fahrer durch die Hervorhebung Fahranweisungen, die ihm z.B. akustisch ausgegeben werden, besser einschätzen, da er die Fahrzeugposition und die vorzunehmende Fahrhandlung unmittelbar in Bezug setzen kann.

Erfindungsgemäß werden die hervorgehobenen Objekte farblich und/oder kontrastmäßig unterschiedlich zu den übrigen Objekten angezeigt. Eine derartige Hervorhebung kann durch einen Benutzer unmittelbare erfasst werden. Hierbei ist es besonders vorteilhaft, die hervorgehobenen Objekte in Farbe und übrige Objekte in Grautönen darzustellen. Durch einen derart starken Farbkontrast wird die Auffassung durch einen Benutzer weiter erleichtert. Zudem wird ein Benutzer gezielt auf die Fahrtroute, der er folgen soll, hingewiesen. Durch einen fließenden Übergang zwischen farblicher und schwarz-weißer Darstellung können Kontrastunterschiede gesenkt werden.

Durch die in den Unteransprüchen aufgeführten Maßnahmen sind vorteilhafte Weiterbildungen und Verbesserungen der im Hauptanspruch angegebenen Navigationsvorrichtung möglich. Besonders vorteilhaft ist, Objekte in der Fahrzeugumgebung mit einer Kartendarstellung zu verbinden, da hierdurch einem Benutzer die Orientierung durch die direkte Verbindung zu den Verkehrswegen in der Karte erleichtert wird. Gegebenenfalls können in der Karte auch Straßennummern oder Straßennamen angegeben sein, die ein Benutzer mit den in seiner Umgebung befindlichen Straßennummern oder Straßennamen vergleichen kann.

Ferner ist vorteilhaft, die hervorgehobenen Objekte detailgetreuer darzustellen als übrige Objekte. Denn für die hervorgehobenen Objekte soll bevorzugt eine Wiedererkennung durch den Benutzer erfolgen. Objekte, die sich nicht unmittelbar an der Fahrtroute befinden, sieht ein Benutzer möglicherweise für seine Fahrt nicht, so dass auf eine detailgetreue Darstellung verzichtet werden kann. Z.B. könnte hier lediglich eine Symboldarstellung oder eine Umrissdarstellung erfolgen.

Ferner ist vorteilhaft, die Objekte in Umrissdarstellungen anzuzeigen, in die gegebenenfalls Texturen eingefügt werden. Eine derartige Darstellung ist einfacher als eine fotorealistische Anzeige eines Objekts und benötigt dabei weniger Speicherplatz und Rechenaufwand. Dennoch ist eine einfache Wiedererkennung anhand der Umrissformen möglich.

Ferner ist eine dreidimensionale Darstellung von Objekten in der Fahrzeugumgebung vorteilhaft. Unter einer dreidimensionalen Darstellung soll insbesondere eine perspektivische Darstellung zur Erzeugung eines räumlichen Eindrucks in einer Anzeige verstanden werden, die für eine zweidimensionale Darstellung ausgelegt ist, z.B. eine herkömmliche Flüssigkristallanzeige.

Weiterhin ist vorteilhaft, zusätzliche Informationen zu den hervorgehobenen Objekten in die Fahrzeugumgebung einzublenden. Durch eine Beschränkung der Einblendung auf die hervorgehobenen Objekte bleibt die Anzeige übersichtlich und der Benutzer kann sich dennoch über die Funktion der jeweiligen hervorgehobenen Objekte informieren.

Ferner ist vorteilhaft, eine virtuelle Fahrzeugposition auszuwählen, um sich gegebenenfalls bereits vor einer Fahrt über die Umgebung der jeweiligen virtuellen Fahrzeugposition informieren zu können.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Navigationsvorrichtung,
Figur 2 ein Speichersegment für die Speicherung von Grafiken für Objekte in der Fahrzeugumgebung,
Figuren 3 bis 6 Ausführungsbeispiele für eine Anzeige der erfindungsgemäßen Navigationsvorrichtung.

### Beschreibung des Ausführungsbeispiels

Die Navigationsvorrichtung kann für beliebige Fahrzeuge verwendet werden. Insbesondere eine Verwendung in Kraftfahrzeugen ist vorteilhaft, da in Kraftfahrzeugen für die Anzeige von Fahrerinformationen im Allgemeinen nur eine verhältnismäßig kleine Anzeigefläche zur Verfügung steht, die dennoch ein Maximum an Informationen vermitteln soll. Zudem sind aus Kostengründen die Anzeigen in Kraftfahrzeugen mitunter nur mit einer begrenzten Auflösung ausgestattet, um eine Anzeige kostengünstig realisieren zu können. Im Folgenden wird daher eine erfindungsgemäße Navigationsvorrichtung am Beispiel einer Navigationsvorrichtung in einem Kraftfahrzeug erläutert.

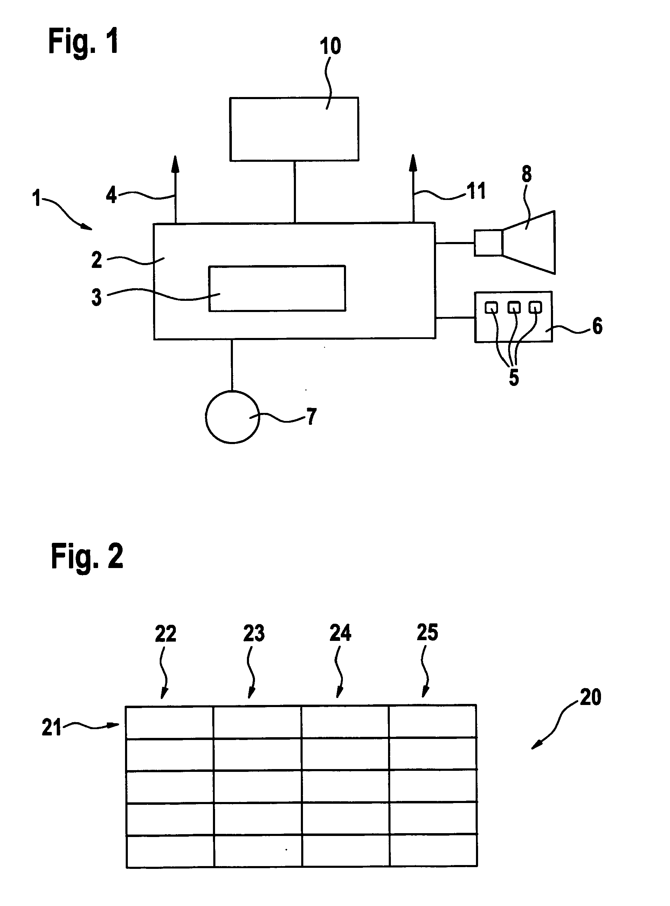

In der Figur 1 ist eine erfindungsgemäße Navigationsvorrichtung 1 dargestellt, die eine Zentraleinheit 2 mit einer Recheneinheit 3 aufweist. Über eine Ortungseinheit 4, z.B. eine Satellitenortungseinheit, wird eine aktuelle Position der in dem Kraftfahrzeug angeordneten Navigationsvorrichtung 1 bestimmt. Über Tasten 5 einer Bedieneinheit 6 gibt ein Fahrer ein Fahrziel in die Navigationsvorrichtung 1 ein. Die Recheneinheit 3 bestimmt eine Fahrtroute von der über die Ortungseinheit 4 bestimmten aktuellen Fahrzeugposition zu dem über die Bedieneinheit 6 eingegebenen Fahrziel. Hierzu greift die Recheneinheit 3 auf einen Datenspeicher 7 zu. Die Daten liegen in einer Ausführungsform auf einem Datenträger vor, der in ein entsprechendes Datenträgerlaufwerk eingelegt ist und in dieser Ausführungsform den Datenspeicher 7 bildet. Einem Benutzer der Navigationsvorrichtung 1 werden über eine Anzeige 10 Fahranweisungen optisch ausgegeben, entsprechend denen er der berechneten Fahrtroute folgen kann. Gegebenenfalls können auch Fahrhinweise akustisch über einen Lautsprecher 8 ausgegeben werden. Ferner verfügt die Navigationsvorrichtung 1 über eine Empfangseinheit 11 zum Empfangen von Funksignalen, z.B. von Rundfunksignalen oder von Funksignalen einer Telefonverbindung. Damit können Daten an die Navigationsvorrichtung 1 übertragen werden. Dies können einerseits Daten zur Ergänzung des Datenbestands in dem Speicher 7, aber auch aktuelle Verkehrsmeldungen zur Berücksichtigung bei der Routenplanung sein.

In dem Speicher 7 sind Kartendaten abgelegt, die ein Straßennetz und Punkte in diesem Straßennetz beschreiben. Bei der Berechnung einer Fahrtroute optimiert die Recheneinheit 3 die Fahrtroute von einem Startpunkt zu einem ausgewählten Fahrziel in der Karte. Anhand der gespeicherten Kartendaten erfolgt eine grafische Kartendarstellung in der Anzeige 10. Zudem sind grafische Darstellungen von Objekten in dem Datenspeicher 7 abgelegt. Diese Objekte werden in der Anzeige 10 zur Darstellung einer Fahrzeugumgebung angezeigt. Sie dienen zur besseren Orientierung des Fahrers entlang der Fahrtroute. In einer ersten Ausführungsform ist es möglich, die Fahrzeugumgebung rechnerisch zu simulieren und aus der Sicht des Fahrers in der Anzeige 10 darzustellen. Ferner ist es möglich, in der Anzeige 10 eine Kartendarstellung mit eingeblendeten besonderen Objekten in der Anzeige 10 anzuzeigen.

In der Figur 2 ist eine Struktur eines Speichers 20 zur Speicherung von grafischen Daten für die besonderen Objekte dargestellt. In den Zeilen, von denen eine Zeile 21 mit einem Bezugszeichen versehen ist, sind jeweils Daten zu einem besonderen Objekt abgelegt. In einer ersten Spalte 22 ist eine Textbezeichnung des besonderen Objekts abgelegt. In einer zweiten Spalte 23 ist eine geografische Position des besonderen Objekts abgelegt. In einer dritten Spalte 24 ist eine erste grafische Darstellung und in einer vierten Spalte 25 ist eine zweite grafische Darstellung des besonderen Objekts dargestellt. Die erste grafische Darstellung 24 gibt Parameter für eine hervorgehobene Darstellung des besonderen Objekts an. Diese Darstellung wird gewählt, wenn sich das Objekt in einer näheren Fahrzeugumgebung um das Fahrzeug herum und an einer Fahrtroute des Fahrzeugs befindet. Die zweite grafische Darstellung wird gewählt, wenn das besondere Objekt einen Abstand zu der Position des Fahrzeugs und zu der Fahrtroute aufweist. Für Objekte mit einer sekundären Navigationsrelevanz kann bevorzugt auch nur eine grafische Darstellung gespeichert werden. Unter der Fahrtroute wird in einer ersten Ausführungsform die von dem Startpunkt zu dem Fahrziel berechnete Fahrtroute verstanden. In einer weiteren Ausführungsform kann bei einer Navigationsvorrichtung, die keine Routenberechnung aufweist und dem Fahrer lediglich eine Orientierung erleichtern soll, auch ein Bereich vor dem Fahrzeug verstanden werden, in das das Fahrzeug hineinfährt, also z.B. ein vor dem Fahrzeug liegender Straßenbereich.

Anstelle eines Speichers 7, der im Fahrzeug mitgeführt wird, kann eine Routenberechnung auch über die Funkschnittstelle 11 mittels einer Dienstezentrale durchgeführt werden. Eine Recheneinheit zur Routenberechnung befindet sich in der Dienstezentrale. Ebenso befindet sich in der Dienstezentrale ein Speicher mit Kartendaten, so dass die Fahrtroute vom Fahrzeug bei der Dienstezentrale angefragt, in der Dienstezentrale berechnet und an das Fahrzeug zurückübertragen wird.

In den Anzeigen wird die Realität durch Abstraktion der darzustellenden Objekte vereinfacht. Die Vereinfachung erfolgt dabei in mehreren Stufen, wobei Objekte an der Fahrtroute möglichtst detailliert dargestellt werden, während Objekte, die von der Fahrtroute entfernt sind, vereinfacht dargestellt werden, um einerseits die Orientierung zu ermöglichen, andererseits dem Fahrer jedoch noch gegebenenfalls notwendige Informationen zu vermitteln. Hierdurch wird einerseits die Wiedererkennung ermöglicht, ohne andererseits eine Darstellung zu überladen, so dass die Übersichtlichkeit gewährleistet werden kann. Zudem kann ferner eine Abhängigkeit der Darstellung vom Maßstab gegeben sein, so dass die Darstellung in Abhängigkeit von der Auflösung der Anzeige erfolgen kann. Insbesondere wird an Orten, an denen sich besondere Objekte häufen, eine Reduzierung der Darstellung dieser Objekte durch eine Reduzierung auf die Objekte in der Nähe der Fahrtroute erreicht.

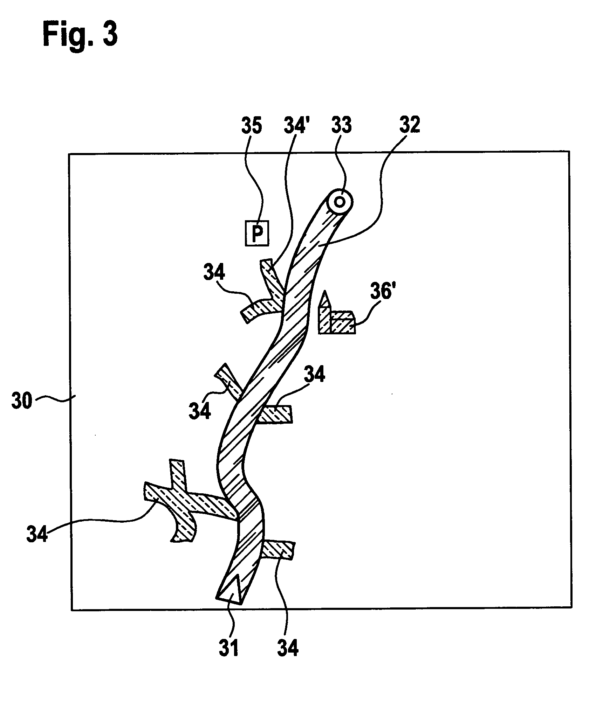

In der Figur 3 ist ein erstes Beispiel für eine Kartendarstellung in der Anzeige 10 gezeigt. In der Anzeigefläche 30 ist eine aktuelle Position 31 des Kraftfahrzeugs mit einem Pfeil dargestellt. Vor dem Fahrzeug ist eine Fahrtroute 32 dargestellt, die von dem Startpunkt 31 zu einem Fahrziel 33 führt. Die Fahrtroute 32 ist ein Straßenverlauf, der aus einem Straßennetz ausgewählt worden ist. In der Anzeigefläche 30 wird nun keine komplette Umgebungskarte der Fahrtroute 32 dargestellt, sondern es werden an Abzweigungen, an denen von der Fahrtroute 32 Straßen abzweigen, Ansätze 34 dieser Straßen dargestellt. Die Ansätze 34 bezeichnen jeweils mögliche Abfahrten oder Kreuzungen, an denen ein Fahrer sich für eine der angebotenen Straßen entscheiden muss. Der Fahrer kann sich nun anhand der Anzeigefläche 30 entlang der Fahrtroute 32 orientieren. Weitere Straßen, die sich in der Umgebung der Fahrtroute befinden, die jedoch die Fahrtroute 32 nicht kreuzen, werden in der Anzeigefläche nicht dargestellt. Besondere Objekte in der Umgebung der Fahrtroute können ebenfalls hervorgehoben werden. So ist an einer der Abzweigungen ein Parkplatzsymbol 35 angeordnet, wodurch einem Benutzer gezeigt wird, dass er bei einem Abzweig entlang der entsprechenden Abzweigung 34' den Parkplatz 35 erreichen kann. Ferner ist zur Orientierung des Benutzers ein Gebäude, hier eine Kirche 36 in Umrissdarstellung an der Fahrtroute 32 dargestellt. Die Fahrtroute 32 kann farblich unterschiedlich zu den Abzweigungen 34 dargestellt sein, so dass für einen Benutzer stets erkennbar ist, welche die von ihm zu benutzende Straße ist.

Unter Objekten in der Fahrzeugumgebung sind einerseits besondere Objekte wie z.B. touristische Einrichtungen, Orientierungspunkte, öffentliche Gebäude oder Parkplätze zu verstehen. Zum anderen sind Objekte im erfindungsgemäßen Sinne jedoch auch Straßenbereichen und Abzweigungen, die von der Fahrtroute 32 wegführen.

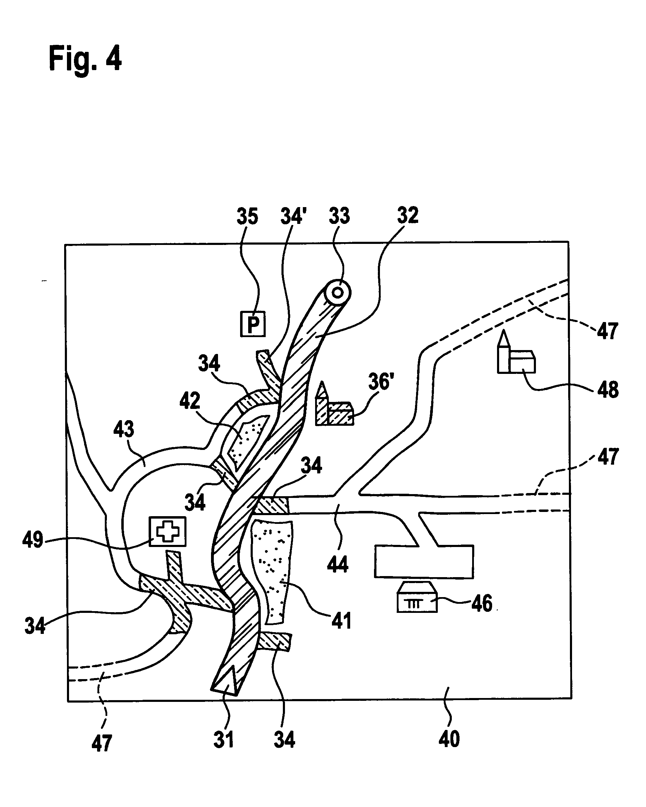

In der Figur 4 ist ein Ausführungsbeispiel der in der Figur 3 dargestellten Kartendarstellung gezeigt. In der Anzeigefläche 40 ist ebenfalls die Fahrtroute 32, hier zur Unterscheidung schraffiert, das Fahrziel 33 und der Startpunkt 31 dargestellt. Die Fahrtroute 32 ist in einer ersten Farbe in die Karte eingeblendet, z.B. in hellblauer Farbe. Fahrziel und Startpunkt 33, 31 sind demgegenüber z.B. mit den Farben dunkelblau oder rot hervorgehoben. Die Abzweigungen 34 sind dem gegenüber in gelb farblich abgesetzt. Zusätzlich sind zur Orientierung benachbart zu der Fahrtroute eine erste Parkfläche 41 und eine zweite Parkfläche 42 in grün dargestellt. Das Parkplatzsymbol 35 ist in blau dargestellt und ebenfalls ist die Kirche 36' bei der hier gewählten Darstellung farblich dargestellt vorzugsweise in der Farbe, die sie auch in der Realität aufweist. Bevorzugt erfolgt jedoch keine fotorealistische Darstellung der Kirche 36', sondern die Umrisse der Kirche werden dargestellt und mit einer entsprechende, gegebenenfalls auch farblich verschiedenen Texturen ausgefüllt. Ferner sind in der Figur 4 weitere Straßen links und rechts der Fahrtroute 32 dargestellt, die an die Abzweigung 34 anschließen. Sowohl auf der linken Seite sind hierzu Straßen 43 als auch auf der rechten Seite Straßen 44 dargestellt. In einer ersten Ausführungsform unterscheiden sich die Straßen 43, 44 von der Fahrtroute 32 und den Abzweigungen 34 in ihrer farblichen Darstellung. In einer bevorzugten Ausführungsform sind die Straßen 43, 44 in einer Graustufendarstellung angezeigt, wobei sich die Straßen 43, 44 durch ein helleres Grau von einer dunkelgraueren Umgebung abhebt, die durch den Hintergrund der Straßen 43, 44 gebildet wird. Hierdurch wird der Fokus eines Benutzers auf die Fahrtroute 32 und die Abzweigungen der Fahrtroute 34 gelenkt, da diese sich nun farblich von dem sie beiderseitig umgebenden Graubereich abheben. Ferner kann auch ein Symbol 45 für ein Krankenhaus und ein Symbol 46 für ein Museum schwarz-weiß dargestellt sein. Die Symbole 45, 46 unterscheiden sich z.B. von der Darstellung der Kirche 36' dadurch, dass sie nicht mit einer Textur ausgefüllt sind und ebenfalls in grau dargestellt sind.

Enfindungsgemäß nimmt der Kontrast der Darstellung der straßen 43,44 mit zunehmendem Abstand von der Fahrtroute ab. Dies ist in der Figur 4 durch gestrichelt gezeichnete Straßen 47 bzw. durch ein gestrichelt dargestelltes Symbol 48 gezeigt.

Anstelle einer farblichen Absetzung, wie es anhand der Figur 4 erläutert wurde, ist es auch möglich, den Kontrast und/oder Helligkeitsunterschiede zwischen der Fahrtroute 32 und den umgebenden Straßen 43, 44 abzusenken. Während die Fahrtroute 32 dann z.B. eine hohen Kontrast gegenüber einer Hintergrundfarbe aufweist, wird der Kontrast bei den die Fahrtroute umgebenden Straßen 43, 44 gegenüber ihrem Hintergrund vermindert. Hierbei nimmt der Kontrast und/oder die Farbigkeit mit zunehmendem Abstand von der Fahrtroute 32 kontinuierlich ab Hierdurch entstehen in der Darstellung weiche Übergänge zwischen kontrastreichen Bereichen in einer Umgebung der Fahrtroute und übrigen Bereichen, in denen Objekte in der Fahrzeugumgebung abgeschwächt dargestellt werden.

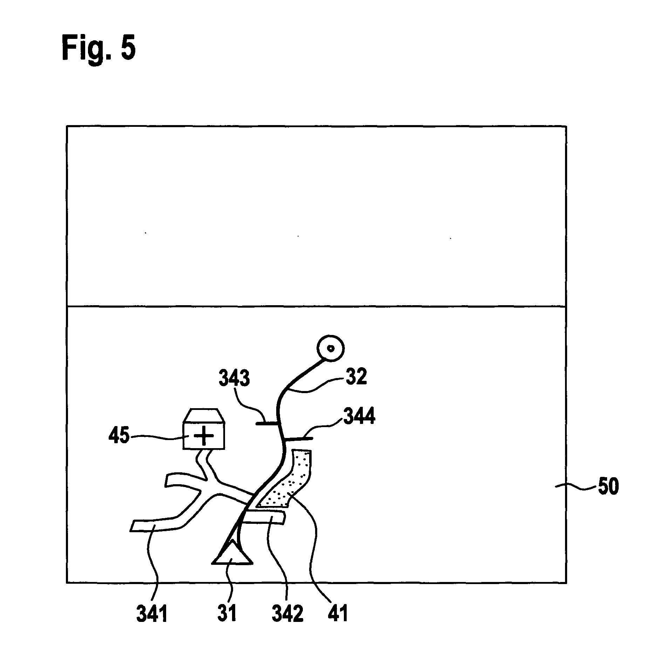

Während in der Figur 3 und in der Figur 4 eine Aufsicht auf eine Karte dargestellt ist, wie sie herkömmlich aus zeichnerischen Kartendarstellungen bekannt ist, so zeigt Figur 5 eine perspektivische Ansicht der Fahrtroute 32 entsprechend der Kartendarstellung der Figuren 3 und 4. In der Figur 5 ist eine Darstellung von Objekten davon abhängig, wie nahe sich die Fahrzeugposition 31 an den Objekten befindet. So sind die erste Grünfläche 41 das Krankenhaus 35 und die naheliegenden Abzweigungen 341 und 342 dargestellt. Die weiter entfernten Abzweigungen 343 und 344 sind nur noch schematisch angedeutet, während weitere Abzweigungen derzeit noch nicht dargestellt sind und erst bei einer Annäherung der aktuellen Fahrzeugposition an diese Abzweigungen eingeblendet werden.

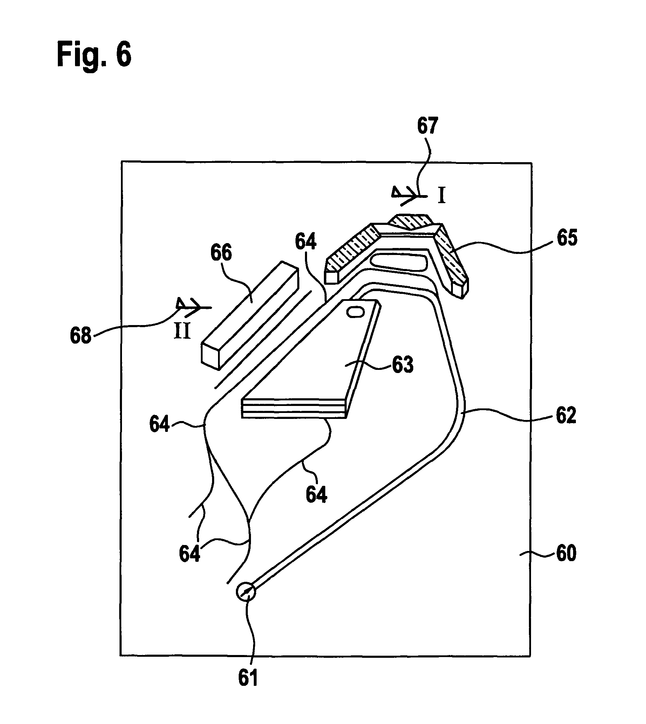

Ein weiteres Beispiel einer Kartendarstellung ist in der Figur 6 dargestellt, bei der in der Anzeigefläche 60 eine perspektivische Darstellung eines Flughafenterminals gezeigt ist. Eine Fahrtroute 62 eines Fahrzeugs führt von einer aktuellen Fahrzeugposition 61 zu einem Parkhausterminal 63. Die Fahrtroute 62 ist verbreitert und vergrößert gegenüber anderen Straßen 64 in der Anzeige dargestellt. Ein erstes Flughafenterminalgebäude 65 und ein zweites Flughafenterminalgebäude 66 sind ebenso wie das Parkhaus 63 in einer Umrissdarstellung angezeigt und weisen gegebenenfalls Texturen auf. Anstelle einer Beschreibung der Terminalgebäude 65, 66 und des Parkhauses 63 in Textform werden die Gebäude in ihrer räumlichen Ausdehnung zur Anzeige gebracht. Lediglich die Flughafenterminalgebäude 65 und 66 sind mit einem Symbol 67, 68 zur Unterscheidung der beiden Terminals versehen. Die Anzeigendarstellung ist hierbei auf das Wesentliche reduziert, nämlich auf die Darstellung der Fahrtroute 62 sowie der Gebäude und unmittelbaren Fahrstrecken in der Umgebung, so dass sich ein Fahrer hieran orientieren kann. Die Fahrtroute 62 und bevorzugt auch das Parkhausterminal 63 sind dabei farbig dargestellt, während die übrigen Gebäude und Straßen in einer Grautondarstellung angezeigt werden. Weitere wichtige Punkte und Objekte im Flughafenbereich, wie z.B. eine Tankstelle, weitere Parkhäuser, eine Kurzparkerzone oder ein Frachtterminal sind in der Anzeigendarstellung 60 nicht hervorgehoben, da sie sich nicht auf die zuvor bestimmte Fahrtroute 62 des Fahrzeugs beziehen.

Über die Tasten 5 der Bedieneinheit 6 kann ein Fahrer die Fahrzeugposition einerseits hinsichtlich der dargestellten Perspektive und in einer weiteren Ausführungsform auch bezüglich der Fahrzeugposition frei wählen. Neben einer Ausgangsposition, die über die Ortungseinheit 4 bestimmt wird, kann ein Fahrer mittels der Bedieneinheit 6 auch eine gewünschte Position eingeben, so dass er sich über die Ansicht bereits im Vorfeld der Fahrt informieren kann. So könnte ein Fahrer die Darstellung des Flughafens gemäß der Anzeigendarstellung 60 auswählen und sich möglicherweise mehrere Parkmöglichkeiten im Flughafen bereits im Vorfeld anzeigen lassen und eine dieser Parkmöglichkeiten zur Routenfestlegung dann auswählen.

Für den Fall, dass ein Straßenverkehrsverlauf sich über mehrere Ebenen erstreckt, z.B. in Parkhäusern, an Flughäfen oder in bestimmten Innenstadtbereichen mit hoher Bebauung kann die Darstellung von den Objekten in der Fahrzeugumgebung zudem nicht nur von der Position des Fahrzeugs, sondern auch von der Ebene abhängig gemacht werden, in der sich das Fahrzeug gerade befindet. So wäre z.B. die Darstellung unterschiedlicher Parkebenen in dem in der Figur 6 gezeigten Flughafen möglich.

Neben den gespeicherten, fixen Objekten der Fahrzeugumgebung ist es auch möglich, über die Funkschnittstelle mobile bzw. veränderliche Objekte, wie z.B. Baustellen, in die Anzeigendarstellung mit einzubeziehen. Ferner kann auch ein Höhenprofil der Umgebung bei der perspektivischen Darstellung gemäß der Figuren 5 bzw. 6 mit berücksichtigt werden. Die Aufsichtdarstellung, wie in den Figuren 3 und 4 gezeigt, stellt eine mögliche Auswahl der perspektivischen Darstellung als Spezialfall einer senkrechten Aufsicht dar.

## Patentansprüche

1. Navigationsvorrichtung zur Führung eines Fahrzeugs mit einer Anzeigeeinheit zur Ausgabe einer Fahrtroute und zur Darstellung von Objekten in einer Fahrzeugumgebung, wobei die Fahrtroute und zumindest einige der Objekte in der Fahrzeugumgebung, die an die Fahrtroute grenzen, gegenüber übrigen Objekten in der Fahrzeugumgebung hervorgehoben dargestellt sind, wobei die hervorgehobenen Objekte farblich und/oder kontrastmäßig unterschiedlich zu den übrigen Objekten angezeigt sind, **dadurch gekennzeichnet, dass** die Intensität einer Darstellungsfarbe von Objekten und/oder der Kontrast einer Darstellung von Objekten mit einem zunehmenden Abstand der Objekte von der Fahrtroute (32, 62) kontinuierlich abnimmt.

2. Navigationsvorrichtung nach Anspruch 1, **gekennzeichnet durch** eine Kartendarstellung (20, 30, 40, 50) zur Anzeige der Objekte in der Fahrzeugumgebung und zur Anzeige der Fahrtroute (32, 62).

3. Navigationsvorrichtung nach einem der vorherigen Ansprüche, **dadurch gekennzeichnet, dass** eine hervorgehobene Anzeige des Objekts mehr Details des Objekts umfasst, als eine nicht hervorgehobenen Anzeige des Objekts umfasst.

4. Navigationsvorrichtung nach einem der vorherigen Ansprüche, **dadurch gekennzeichnet, dass** die Objekte in Umrissdarstellungen (35, 36, 46, 63, 65, 66) angezeigt sind.

5. Navigationsvorrichtung nach Anspruch 4, **dadurch gekennzeichnet, dass** die Umrisse mit Texturen ausgefüllt sind.

6. Navigationsvorrichtung nach einem der vorherigen Ansprüche, **gekennzeichnet durch** eine Anzeige (10, 50, 60) zur dreidimensionalen Darstellung von Objekten in der Fahrzeugumgebung.

7. Navigationsvorrichtung nach einem der vorherigen Ansprüche, **dadurch gekennzeichnet, dass** Informationen (67, 68) zu den hervorgehobenen Objekten in der Fahrzeugumgebung in die Anzeige einblendbar sind.

8. Navigationsvorrichtung nach einem der vorherigen Ansprüche, **gekennzeichnet durch** eine Bedieneinheit (6) zur Auswahl einer virtuellen Fahrzeugposition.

9. Navigationsvorrichtung nach einem der vorherigen Ansprüche, **dadurch gekennzeichnet, dass** besondere Einrichtungen (35, 45) in der Fahrzeugumgebung als symbolhafte Objekte angezeigt sind.

## Claims

1. Navigation apparatus for guiding a vehicle having a display unit for outputting a journey route and for showing objects in a vehicle environment, where the journey route and at least some of the objects in the vehicle environment which border the journey route are shown highlighted in comparison with other objects in the vehicle environment, the highlighted objects being displayed in a different colour and/or contrast from the other objects, **characterized in that** the intensity of a representational colour for objects and/or the contrast of a representation for objects continually decreases as the distance of the objects from the journey route (32, 62) increases.

2. Navigation apparatus according to Claim 1, **characterized by** a map display (20, 30, 40, 50) for displaying the objects in the vehicle environment and for displaying the journey route (32, 62).

3. Navigation apparatus according to one of the preceding claims, **characterized in that** a highlighted display for the object comprises more details for the object than an unhighlighted display for the object.

4. Navigation apparatus according to one of the preceding claims, **characterized in that** the objects are displayed in outline representations (35, 36, 46, 63, 65, 66).

5. Navigation apparatus according to Claim 4, **characterized in that** the outlines are filled by textures.

6. Navigation apparatus according to one of the preceding claims, **characterized by** a display (10, 50, 60) for three-dimensional representation of objects in the vehicle environment.

7. Navigation apparatus according to one of the preceding claims, **characterized in that** information (67, 68) relating to the highlighted objects in the vehicle environment can be opened in the display.

8. Navigation apparatus according to one of the preceding claims, **characterized by** an operator control unit (6) for selecting a virtual vehicle position.

9. Navigation apparatus according to one of the preceding claims, **characterized in that** particular facilities (35, 45) in the vehicle environment are displayed as symbolic objects.

## Revendications

1. Dispositif de navigation pour guider un véhicule, comprenant une unité d'affichage pour délivrer un itinéraire et représenter des objets dans un environnement du véhicule, dans lequel l'itinéraire et au moins quelques-uns des objets de l'environnement du véhicule proches de l'itinéraire, sont représentés éclairés par rapport à d'autres objets de l'environnement du véhicule, les objets éclairés étant affichés différemment des autres objets par des couleurs et/ou des contrastes,
**caractérisé en ce que**
l'intensité d'une couleur d'affichage et/ou le contraste de représentation des objets diminue de façon continue quand la distance des objets augmente par rapport à l'itinéraire de voyage (32, 62).

2. Dispositif de navigation selon la revendication 1,
**caractérisé par**
une représentation cartographique (20, 30, 40, 50) permet d'afficher les objets de l'environnement du véhicule et l'itinéraire (32, 62).

3. Dispositif de navigation selon l'une quelconque des revendications précédentes,
**caractérisé en ce qu'**
un affichage en suréclairage de l'objet comprend plus de détails de l'objet qu'un affichage de l'objet sans éclairage.

4. Dispositif de navigation selon l'une quelconque des revendications précédentes,
**caractérisé en ce que**
les objets sont affichés en représentation de contour (35, 36, 46, 63, 65, 66).

5. Dispositif de navigation selon la revendication 4,
**caractérisé en ce que**
les contours sont remplis avec des textures.

6. Dispositif de navigation selon l'une quelconque des revendications précédentes,
**caractérisé par**
un affichage (10, 50, 60) de représentation tridimensionnelle des objets dans l'environnement du véhicule.

7. Dispositif de navigation selon l'une quelconque des revendications précédentes,
**caractérisé en ce que**
l'affichage inclut des informations (67, 68) pour les objets de l'environnement du véhicule avec suréclairage.

8. Dispositif de navigation selon l'une quelconque des revendications précédentes,
**caractérisé par**
une unité de manoeuvre (6) pour sélectionner une position de véhicule virtuelle.

9. Dispositif de navigation selon l'une quelconque des revendications précédentes,
**caractérisé en ce que**
des installations particulières (35, 45) de l'environnement du véhicule sont affichées comme objets symboliques.
